# EUROPEAN PATENT APPLICATION

(11) **EP 1 349 353 A2**
(43) Date of publication of application: **01.10.2003**
(21) Application number: 03006955.3
(22) Date of filing: 26.03.2003
(51) Int. Cl.: H04M 1/60, H04M 1/725

(54) **Method and apparatus for using external audio system with a communication device**

(30) Priority: 26.03.2002 US 107554
(71) Applicant: Overbreak, LLC, Sun Valley, California 91352 (US); Audex Telecom Industrial Co, Ltd, Zhongshan 528403 (CN)
(72) Inventor: Hao, Liu Zheng, Xin Gun Kou, Zhongshan 528403 (CN)
(74) Representative: Jehle, Volker Armin, Dipl.-Ing.

(57) **Abstract**

Methods and apparatus are described for enabling a user using a communication device, such as a cell phone, to make and receive calls in a hands-free mode and utilize an existing audio system, such as a radio, to output audio received from the other party, i.e., the calling or called party. An accessory containing an RF transmitter and a microphone, among other components, is attached mechanically to a communication device, for example, using a clip. There is no electrical or digital connection between the accessory and the communication device. The accessory has an internal microphone which is positioned close to the speaker of the communication device to detect sounds waves emanating from the speaker. The sound waves are converted to an RF signal and transmitted to a radio at a particular radio frequency channel thereby allowing the user to hear the other party's voice over the radio speakers. The communication device is placed near the user so that the microphone of the cell phone can sufficiently detect the user's voice. The communication device need not be held by the user thereby keeping both hands of the user free.

## Description

### Field of the Invention

The present invention relates to an apparatus for use with a wireless communication device, such as a cellular telephone or a cordless, that facilitates use of the communication device. In particular, the invention relates to an accessory that functions with a communication device enabling use of the device without having to physically hold the device and that takes advantage of a nearby audio system, such as a radio, for operation.

### Background of the Invention

As the use of cellular phones, mobile phones, car phones, and other wireless communication devices has increased dramatically over the last several years, the safety of using such devices while driving has become a public concern. It is now recognized as a safety hazard to other drivers and pedestrians. Often drivers use one hand to hold the device and the other to steer and operate the vehicle. This has resulted in a higher number of accidents. Some states have passed laws prohibiting the holding of a phone while driving. As a result, various phone accessories have been devised to enable hands-free use of a phone while driving or performing other activities such as using a computer. The basic purpose of a hands-free accessory is to free the driver from distractions having to do with holding, manipulating and positioning the phone. Perhaps the most common device used for this purpose is a small microphone and ear piece that attaches to the phone through a cord and allows the user to speak and listen to a caller without having to hold the phone.

However, the microphone and ear piece accessory is not always convenient or suitable. Furthermore, it does not take advantage of existing audio equipment typically present in a vehicle, such as a radio and speakers. In addition to using a phone without having to hold the phone, a user may want others in the car to be able to listen to the conversation between the user and the caller, i.e., enable a
speaker phone type function. In other cases the use may not be comfortable or physically capable of using an ear piece and would rather hear the caller through speakers, such as those in a car. In other instances, the use may not be comfortable with or physically capable of attaching a microphone to his or her clothing or, generally, using a microphone. In many cases the microphone and ear piece must be used together.

There are presently a number of accessories and components for mobile communication devices that allow use of the device, in particular, a cell phone, in conjunction with a radio and allow for hands-free use of the phone. These accessories typically require that they be electrically connected to the phone in some manner. The connection may be wireless or through some type of physical contact between the phone and the accessory such as through a socket or contact pins. Thus, there is some degree of compatibility required between the phone and the accessory in order for the electrical transfer of signals to take place. In addition, the phone must have an interface that will function with the accessory. The interfaces of cell phones for receiving and transmitting signals has not been standardized. As a result, accessories intended to work with a variety of cell phones must be compatible with various types of interfaces. It is not uncommon that devices required to work with non-standardized interfaces sacrifice performance in order to gain the marketing advantage of being compatible with multiple products.

For example, U.S. Patent No. 5,867,794 to Hayes et al., describes providing a radio transmitter for a cell phone either through an accessory that attaches to the phone or by using a cradle-type holder for the phone. However, in both embodiments the radio transmitter is electrically connected to the cell phone. U.S. Patent No. 6,163,711 Juntunen describes an adapter and interface that operates between a mobile phone and an audio system, such as a car radio. However, in addition to also requiring an electrical connection with the phone, a microphone, connected to the adapter or interface, must be placed close to the user's mouth for the audio signals to be transmitted to the phone.

### SUMMARY OF THE INVENTION

In one aspect of the present invention, a method of using a communication device with an existing audio system, such as a radio, is described. A unit containing an RF transmitter is placed close to or is mechanically or otherwise attachable to the communication device with no electrical connection. The unit receives the actual sound waves from the speaker of the communication device, where such sound waves would otherwise be heard by the user's ear. The unit converts the sound waves to an RF signal. The RF signal is then transmitted to a radio frequency band thereby allowing the sound waves emanating from the communication device to be emitted from one or more speakers connected to the radio. In one embodiment a microphone of the unit is placed close to or flush against a speaker of the communication device to maximize the clarity of the sound waves emanating from the communication device and to block ambient noise and minimize sound from other voices. In another embodiment the RF signal is transmitted at a particular frequency and the radio is tuned to the particular frequency.

In another aspect of the present invention an external RF transmitter unit adapted for use with a cell phone or similar communication device and having no need for an electrical connection or permanent connection is described. The transmitter unit is contained in a housing having an attachment means, such as a clip, magnet, or Velcro, for attaching the transmitter to a communication device in a non-permanent manner. The transmitter unit also contains a microphone for receiving sound waves from a communication device. An RF transmitter within the unit is capable of transmitting an RF signal, corresponding to the sound waves, to a radio frequency band such that the output can be heard on radio speakers and wherein the RF transmitter unit does not need an electrical input/output interface to operate.

### BRIEF DESCRIPTION OF THE DRAWINGS

FIGS. 1A and 1B are perspective views of an attachable unit allowing for hands-free use of a communication device in accordance with one embodiment of the present invention.
FIG. 2 is a flow diagram of a process of using the unit with a communication device in accordance with one embodiment of the present invention.
FIG. 3 is a diagram of a car dashboard having a radio and of a unit placed close to a cell phone in accordance with one embodiment of the present invention.

### DETAILEDDESCRIPTION OF THE PREFERRED EMBODIMENTS

Methods and apparatus for allowing hands-free use of a communication device are described in the various figures. The apparatus of the present invention is placed proximate to a communication device or is attachable to a communication device in a non-electrical or non-digital manner. There is no electrical connection, either physical or wireless, between the communication device and the apparatus or attachable unit. The communication device, such as a cell phone, cordless phone, mobile phone, or other wireless device emits sound waves from a speaker contained within the device to a microphone in the attachable unit of the present invention.

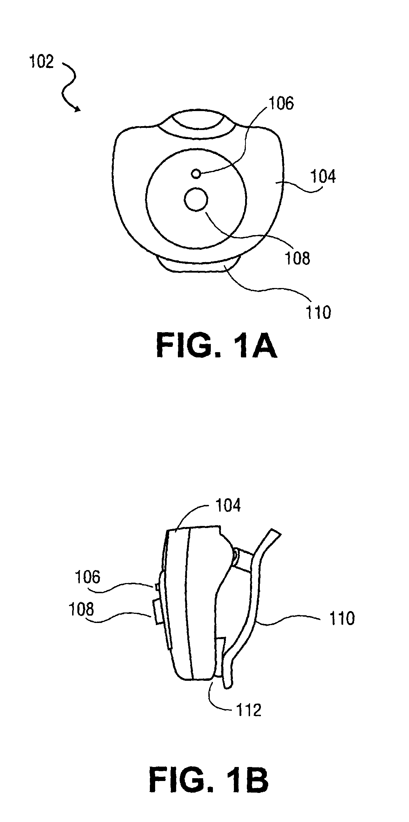

FIGS. 1A and 1B are perspective views of an attachable apparatus allowing for hands-free use of a communication device in accordance with one embodiment of the present invention. FIG. 1A is a front view of the attachable unit. In a preferred embodiment, unit 102 contains a low-power, limited range radio frequency (RF) transmitter and microphone enclosed in a casing 104. On the front of casing 104 are a power on/off indicator 106 and an on/off switch 108. In other embodiments indicator 106 and switch 108 can be positioned elsewhere on casing 104. FIG. 1B is a side view of the attachable unit. Casing 104 has a clip 110 that facilitates mechanically attaching the unit to a communication device such as a cell phone or mobile phone, Clip 110 is shaped such that it conveniently and securely attaches to the device. In other embodiments, the clip can have different shapes to fit over communication devices having different shapes. In other embodiments other means, such as magnets, Velcro, or latches can be used to attach unit 102 to the communication device. Unit 102 has a microphone 112 close to the bottom on the back of casing 104. By placing microphone 112 in this position, when unit 102 is dipped onto the top of, for example, a cell phone, the microphone will typically be flush against the cell phone speaker depending on the design of the cell phone. It is generally desirable to keep microphone 112 as close as possible to the speaker of the communication device so that the emission of sound waves from the cell phone to unit 102 will be clear and so that ambient noise (resulting from the high-noise environment that is typical of a moving vehicle) and the voice of the user (as opposed to the voice of the caller) transmitted to unit 102 are minimized.

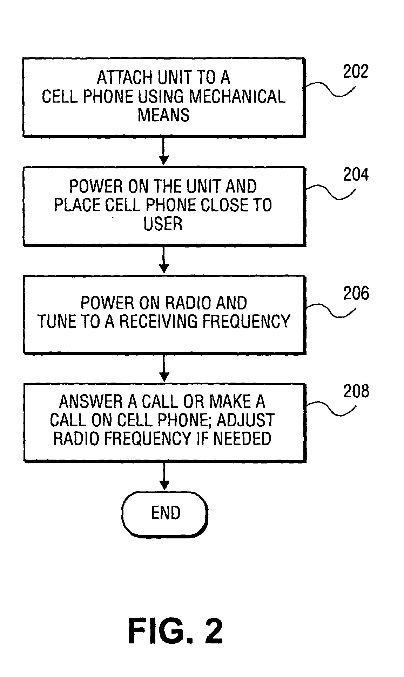

In a preferred embodiment the unit is battery powered, e.g. a lithium battery is used to power the unit, and does not require an electrical connection to a communication device, such as a cell phone, other communication device, or to another power supply, such as a car battery. FIG. 2 is a flow diagram of a process of using the unit with a cell phone in accordance with one embodiment of the present invention. At step 202 the user attaches the unit to a cell phone. In a preferred embodiment the user is an individual using a cell phone while operating a motor vehicle equipped with audio equipment, namely, a radio and speakers. In other embodiments, the user may not be driving or operating a vehicle, but may be performing another activity, such as using a computer or handling equipment requiring use of both hands, and have a radio nearby and wants to use the cell phone in a hands-free mode. The user attaches the unit to the cell phone. In another embodiment, the microphone of the unit is positioned near the speaker of the cell phone. In either case, the unit can be removed from the cell phone or from the vicinity of the cell phone as desired by the user. For example, the user may want to remove the unit so that it can be used with another communication device.

At step 204 the phone is placed in a holder or other location in the vehicle and is powered on. In a preferred embodiment this is done by pressing a button on the front to the unit. In other embodiments other types of switches can be used to power the unit as are known to those of ordinary skill in the art. In a preferred embodiment the phone is placed within one or two meters of the user, for example, clipped to a sun visor of the vehicle. It is preferable to keep the phone as close as possible to the user since when speaking the user's voice must be sensed or detected by the microphone of the cell phone in order for the other party to hear the user. In most cases, the sensitivity of the cell phone microphone is sufficient to detect voices up to approximately one or two meters. The sensitivity or range of the cell phone microphone will depend on the type and quality of the cell phone and can vary widely. In another embodiment the user can use an external microphone electrically connected to the cell phone and keep the external microphone close to the user's mouth as is conventionally done. In this particular scenario the cell phone need not be positioned near the user. However, as noted above, it is desirable to keep the speaker of the communication device close to the microphone unit.

At step 206 the user powers on the vehicle radio and tunes the radio to a pre-determined frequency. In a preferred embodiment a low-power RF transmitter set to one or more frequencies is utilized. In another embodiment either a commercial radio AM or FM frequency can be utilized. The user is informed of all the stations that can be used from the packaging or instructions for the unit when it is purchased. It may be necessary to fine tune or adjust the frequency slightly to obtain a clearer signal. In a preferred embodiment, an RF transmitter is used to broadcast simultaneously to multiple FM channels. In another embodiment, an RF transmitter contained in the unit may be constructed as a two-frequency transmitter which is tuned to broadcast on one of two FM channels. IN any case, the user needs to tune to one of one or more pre-selected AM or FM stations.

At this stage the unit can be used with the vehicle audio system. If a user receives a call, at step 208 the user first presses the appropriate key on the phone to answer the call. Typically, the user has to physically hold the phone in order to answer the call unless the phone is in a holder or cradle. Similarly, the user places a call in the same manner as before. In the case where a call I received, the user answers the call and places the phone in a convenient location such that the cell phone microphone will detect sound or acoustical waves emanating from the user. If preferable, the user can hold the phone in the normal manner, i.e., close to the user's ear and mouth. As mentioned above, the user may have to fine tune the radio to obtain the optimum frequency to hear the other party's voice clearly on the radio speakers. Once the appropriate frequency is fixed, when the user speaks to the caller the user is able to hear the caller's voice over the vehicle audio system, namely, the car speakers.

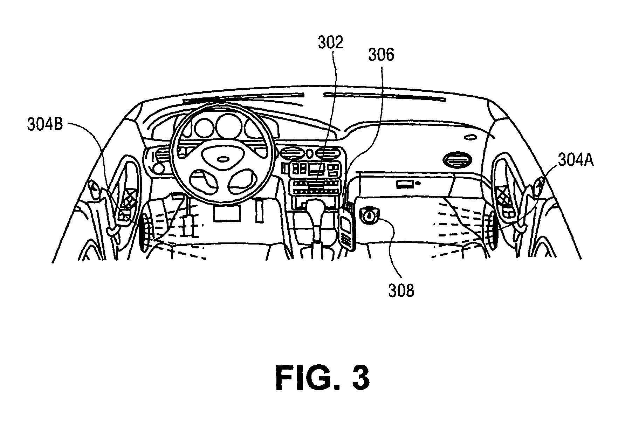

FIG. 3 is a diagram of a car dashboard, a communication device, and a unit in accordance with one embodiment of the present invention. A user, such as a driver or passenger, places a communication device, such as a cell phone 306 in a holder or other convenient location, preferably not further than two meters from e user. A radio 302 is tuned to a pre-selected commercial station as described above. A unit 308 is either placed close to cell phone 306, as shown in FIG. 3, or is attached to it as described above using a clip or other means. When using phone 306, the caller's voice and the user's voice are projected through speakers 304a and 304b and any other speakers electrically attached to radio 302. The caller voice will project through speakers throughout the vehicle allowing passengers, for example in the back of the vehicle, there to hear the caller's voice.

As mentioned above, the caller's voice is transmitted directly from the cell phone speaker to the microphone of the unit via sound waves. There is no electrical connection between the two devices. Thus, the microphone of the apparatus is placed close to the speaker of the cell phone to minimize ambient noise typically present in a moving vehicle and to minimize the reception of sound waves resulting from the user's voice. In a preferred embodiment, the user's voice is not detected by the unit microphone and, thus, is not heard on the speakers. Upon receiving the sound waves, the unit converts the sound waves to an RF signal using techniques known to those of ordinary skill in the art. In a preferred embodiment, an RF transmitter circuit is connected within the unit to the microphone for transmitting RF signals to a radio. An RF transmitter circuit connected to a microphone is also described in U.S. patent No. 6,304,764 B1 to Pan which is incorporated herein in its entirety. The unit transmits the RF signal to the antenna of a nearby radio at one or numerous frequencies. The unit transmits the RF signal via radio waves to the radio in the vehicle. In a preferred embodiment, the unit is less than three meters from the radio receiver.

The user terminates a call in the same manner as before which normally entails pressing a key on the cell phone. The user may also turn the unit off to conserve life of the battery. The frequency band of the car radio can also be changed at this time. Since the unit is not connected to the cell phone electrically, the unit can be easily removed from the phone, if attached, without the need of disconnecting wires. The unit is also compact and ergonomically designed for easy storage and attachment to the cell phone. As described above, the unit is capable of readily interfacing a communication device, such as a cell phone or cordless phone, having a speaker with an existing audio system in so far that no changes need to be made to the audio system or to the communication device. Given that there is no electrical connection between the unit and the communication device, compatibility and related interfacing issues do not arise. All that is needed is that sound waves emanating from the device speaker be effectively sensed by the unit.

Although the foregoing invention has been described in some detail for purposes of clarity of understanding, it will be apparent that certain changes and modifications may be practiced within the scope of the appended claims. Furthermore, it should be noted that there are alternative ways of implementing both the process and apparatus of the present invention. For example, the method of operating a communication device in a hands-free mode may be utilized in any context where the user needs to have both hands free, such as when using a computer, and has a radio receiver and speakers nearby. In another example, the unit may utilize various types of transmitters, such as one for both AM and FM channels. In another example, the sensitivity of the microphone of the unit can vary. Accordingly, the present embodiments are to be considered as illustrative and not restrictive, and the invention is not to be limited to the details given herein, but may be modified within the scope and equivalents of the appended claims.

## Claims

1. A method of using a communication device with a radio, the method comprising:
receiving sound waves generated by a communication device speaker;
converting the sound waves to radio frequency waves;
transmitting the radio frequency waves to a radio receiver near the communication device and the human user; and
electronically transmitting the received radio frequency signals to radio speakers.

2. A method as recited in claim 1 further comprising a microphone close to the communication device speaker.

3. A method as recited in claim 2 further comprising attaching, in a non-permanent manner, a unit containing the microphone to the communication device.

4. A method of using a communication device with a radio, the method comprising:
placing a radio frequency (RF) transmitter unit near the communication device without the user of an electrical connection;
receiving sound waves at the RF transmitter unit, the sound waves emanating from the communication device;
converting the sound waves to an RF signal; and
transmitting the RF signal to a radio frequency band thereby causing the sound waves from the communication device to be emitted from one or more speakers connected to the radio.

5. A method as recited claim 4 further comprising attaching the RF transmitter unit to the communication device.

6. A method as recited in claim 5 wherein attaching an RF transmitter unit to the communication device further comprises placing a microphone contained within the RF transmitter unit close to a speaker of the communication device.

7. A method as recited in claim 4 further comprising transmitting the RF signal at a pre-selected frequency.

8. A method of recited in claim 6 further comprising tuning the radio to the pre-selected frequency whereby the radio receives the RF signal and emits the sound waves from the one or more speakers.

9. A transmitter accessory for use with a communication device enabling sound waves from the communication device to be heard on an external audio system, the transmitter accessory comprising:
a housing having a mechanism for attaching the transmitter accessory to the communication device;
a microphone for sensing sound waves;
a radio frequency (RF) converter capable of converting sound waves to an RF signal and transmitting an RF signal to a radio frequency band, wherein the transmitter accessory does not have an electrical input/output interface for connecting the transmitter accessory to the communication device.

10. A transmitter accessory as recited in claim 9 wherein the microphone is an internal microphone.

11. A transmitter accessory as recited in claim 9 wherein the mechanism for attaching the transmitter accessory to the communication device is a clip.

12. A transmitter accessory as recited in claim 9 wherein the microphone is located in the housing in such a manner as to facilitate sensing of sound waves emanating from a speaker of the communication device.
